# Europäisches Patentamt

# European Patent Office

# Office européen des brevets

(19)

(11) Numéro de publication: **0 126 006**
**B1**

(12)

# FASCICULE DE BREVET EUROPÉEN

(45) Date de publication du fascicule du brevet:
**04.11.87**

(51) Int. Cl.⁴: **B 60 G 15/06**

(21) Numéro de dépôt: **84400975.3**

(22) Date de dépôt: **11.05.84**

(54) **Dispositif de liaison entre la structure d'un véhicule et une jambe de suspension.**

(30) Priorité: 16.05.83 FR 8308089
23.11.83 FR 8318657

(43) Date de publication de la demande:
**21.11.84 Bulletin 84/47**

(45) Mention de la délivrance du brevet:
**04.11.87 Bulletin 87/45**

(84) Etats contractants désignés:
**DE GB IT**

(56) Documents cité:
**EP-A-0 065 235**
**DE-A-3 214 586**
**US-A-4 234 172**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor- Hugo, F-92200 Neuilly- sur- Seine (FR)**

(72) Inventeur: **Le Salver, Robert, Rue des Coteaux Chanteloup les Vignes, F-78570 Andresy (FR)**
Inventeur: **Poupard, Dominique, 8 Route du Pavé des Gardes, F-92370 Chaville (FR)**

(74) Mandataire: **Moncheny, Michel, c/o Cabinet Lavoix 2 Place d'Estienne d'Orves, F-75441 Paris Cedex 09 (FR)**

## Description

L'invention se rapporte aux moyens de liaison entre la structure d'un véhicule automobile et l'extrémité supérieure d'une jambe télescopique de suspension associée à l'une des roues du véhicule. Afin de filtrer les vibrations transmises de la roue à la structure, ces moyens comportent avantageusement une articulation souple, disposée coaxialement à la jambe et constituée d'un manchon en élastomère adhérisé entre une armature externe fixée à la structure et une armature interne fixée à l'extrémité d'un élément supérieur de la jambe. Cet élément peut être la tige de piston d'un amortisseur faisant partie de la jambe de suspension.

Consécutivement aux efforts variables verticaux appliqués à la jambe de suspension, le manchon se déforme et pour limiter la course du débattement axial vers le haut ("attaque") et vers le bas ("détente") entre la tige et la structure, lesdits moyens de liaison comportent de plus, par exemple selon le document DE-A-32 14 586 au moins une coupelle coaxiale à la jambe et fixée à sa pelle étant assez large pour pouvoir prendre appui sur la structure autour du manchon, ou sur celui-ci à proximité de sa périphérie, ou sur l'armature externe.

Une telle coupelle étant située au-dessus de l'articulation, ceci présente un inconvénient, notamment lorsqu'un dispositif hydraulique tel qu'une capacité à membrane doit être placée à cet endroit, comme indiqué dans le brevet FR-A-2 272 857 par exemple.

De même, le document EP-A-65 235 décrit un agencement dans lequel une pièce de butée est incorporée à l'articulation souple et peut coopérer avec deux organes d'appui fixes, disposés respectivement, au-dessous et au-dessus de l'articulation souple, pour limiter les débattements en attaque et en détente, de la suspension. Cette disposition ne permet pas de placer un dispositif hydraulique au-dessus de l'articulation souple.

L'invention a pour but de réaliser, entre la structure d'un véhicule et l'extrémité supérieure d'une jambe télescopique de suspension, un dispositif de liaison à articulation souple associée à des moyens de limitation de débattement axial qui n'encombrent pas la zone située au-dessus de l'articulation.

L'invention a donc pour objet un dispositif de liaison entre la structure d'un véhicule et la partie supérieure d'une jambe de suspension, comprenant une articulation souple du type comportant un manchon élastique disposé entre deux armatures, respectivement fixées sur un élément supérieur de la jambe de suspension et sur la structure, une pièce de butée fixée sur ledit élément supérieur et s'étendant au-dessous de l'articulation souple et une pièce d'appui fixée à la structure et disposée au-dessous de la pièce de butée pour coopérer en détente, avec cette dernière, caractérisé en ce qu'il comporte une autre pièce disposée également au-dessous de l'articulation souple et avec laquelle l'une desdites pièces de butée ou d'appui peut coopérer, lors des débattements, en attaque, de la suspension.

Selon d'autres caractéristiques avantageuses de l'invention:

- la pièce d'appui comporte une partie centrale en élastomère, une armature supérieure fixée à la structure et une armature inférieure;

- ladite partie centrale en élastomère et l'armature supérieure de la pièce d'appui sont formées par des prolongements du manchon élastique et d'une armature de l'articulation souple, cette masse d'élastomère délimitant au moins deux ouvertures radiales dans lesquelles s'engagent des parties de la pièce de butée;

- l'élément supérieur de la jambe de suspension porte deux pièces de butée entre lesquelles est disposée avec jeu axial, une pièce d'appui reliée à la structure;

- la pièce d'appui porte à sa partie inférieure un palier d'appui axial pour un ressort entourant la jambe de suspension;

- une capacité d'un dispositif hydraulique étant située au-dessus de l'articulation souple et comportant une membrane en appui sur la face supérieure du manchon, la pièce de fixation de ce dernier sur l'élément supérieur de la jambe de suspension comporte une tête plate engagée dans un évidement de forme sensiblement complémentaire pratiqué dans la face inférieure de la membrane.

Dans une réalisation de faible prix de revient mais présentant une fiabilité optimale, la pièce d'appui comporte un anneau en élastomère coaxial à la jambe de suspension, adhérisé à sa partie supérieure à un flasque annulaire prolongeant l'armature fixée sur la structure et logé à sa partie inférieure dans une coupelle maintenue axialement avec une faible liberté de déplacement par rapport au flasque, l'anneau comportant une collerette interne inférieure inclinée vers le bas à l'état libre et maintenue déformée en position sensiblement radiale par coopération avec la coupelle.

Quelques exemples de réalisation d'un dispositif de liaison selon l'invention sont décrits ci-après, avec référence aux dessins annexés parmi lesquels:

- la Fig. 1 est une vue d'ensemble simplifiée, en coupe axiale partielle, du dispositif équipant un véhicule automobile;

- les Figs. 2, 3 et 4 sont des vues partielles, en coupe axiale, de trois réalisations du dispositif;

- la Fig. 5 est une vue en coupe axiale d'une autre variante du dispositif;

- la Fig. 6 est une vue partielle en coupe axiale d'une pièce du dispositif de la Fig. 5 à l'état de repos, et

- la Fig. 7 en est une vue partielle de dessous.

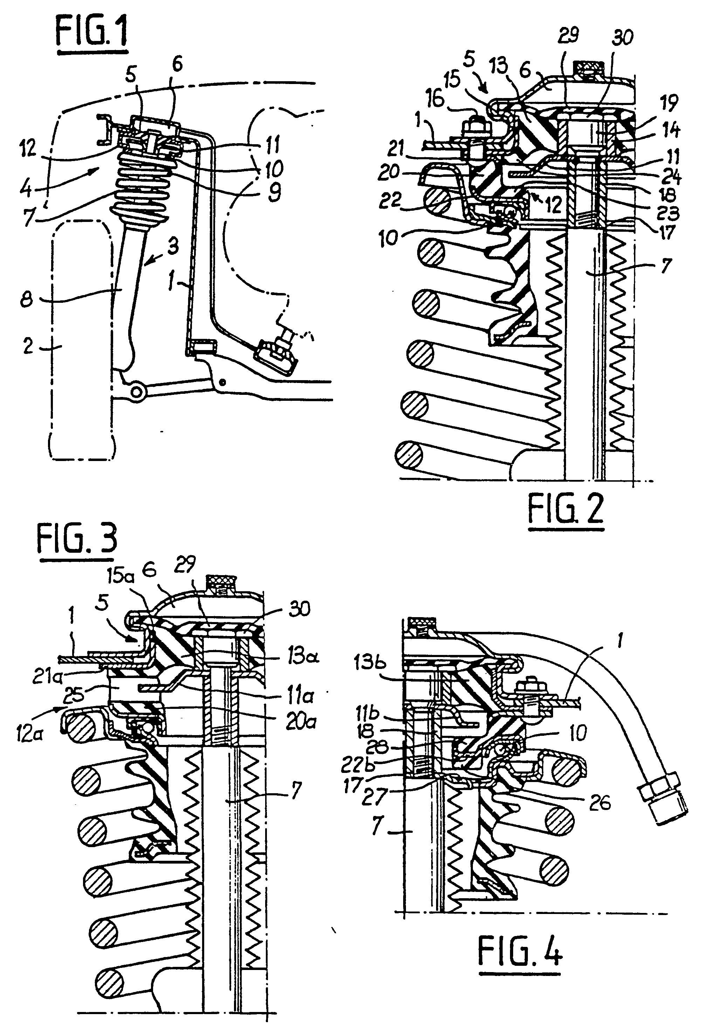

On voit sur la Fig. 1, une partie de la structure 1 d'un véhicule, une roue directrice 2 et une jambe télescopique de suspension 3 reliant la roue 2 à la structure 1. Un dispositif 4 à articulation souple 5 assure la liaison entre la partie supérieure de la jambe de suspension et la structure 1. Une capacité 6 d'un dispositif hydraulique conforme à celui faisant l'objet du brevet FR-2 272 857 est interposée entre l'articulation souple et la structure 1.

La jambe de suspension comporte un amortisseur hydraulique formé d'une tige supérieure 7 et d'un élément inférieur tubulaire 8. Un ressort hélicoïdal de suspension 9 disposé autour de la tige 7 prend appui, d'une part, sur une coupelle solidaire du tube 8 et, d'autre part, sur la structure 1 par l'intermédiaire d'un palier de butée axiale 10 autorisant une rotation de l'élément 8 autour de son axe.

Selon l'invention, une pièce de butée rigide 11 s'étendant transversalement par rapport à l'axe de la tige 7 est fixée à cette tige au-dessous de l'articulation 5 et est adaptée pour buter vers le bas contre une bague d'appui 12 fixée à la structure 1.

La Fig. 2 montre en détail le dispositif de liaison 4 de la Fig. 1: l'articulation souple 5 est constituée par un manchon 73 en élastomère adhérisé entre une armature interne 14 tubulaire, coaxiale à la tige 7, et une armature externe 15 annulaire fixée à la structure 1 par des vis 16. La pièce rigide 11 est ici une coupelle coaxiale à la tige et serrée entre l'armature 14 et un épaulement 17 de la tige, avec interposition d'une entretoise 18, au moyen d'une pièce filetée 19 vissée sur l'extrémité supérieure taraudge de la tige. La bague d'appui 12 comporte une partie centrale 20 en élastomère, une armature supérieure annulaire 21 fixée à la structure par les vis 16, et une armature inférieure 22 portant le palier 10. La coupelle 11 est interposée avec un jeu axial entre un épaulement interne 23 de la bague d'appui et une collerette inférieure 24 externe du manchon 13.

Ce jeu permet un débattement axial de la tige 7 par rapport à la structure. La limitation de ce débattement est assurée vers le bas par butée de la coupelle contre l'épaulement 23 et vers le haut par butée de la coupelle 11 contre la collerette 24 du manchon. La coupelle 11 joue donc le rôle de butée de "détente" (vers le bas) et "d'attaque" (vers le haut).

Dans le mode de réalisation de la Fig. 3, la bague d'appui 12a constitue un prolongement inférieur de l'articulation 5, la partie centrale 20a en élastomère de la bague étant réalisée monopièce avec le manchon 13a analogue au manchon 13 décrit plus haut, et une collerette inférieure 21a de l'armature externe 15a du manchon sert d'armature supérieure à la bague d'appui. La pièce de butée rigide est ici une barrette 11a fixée à la tige 7 comme la coupelle 11 de la disposition précédente. Chaque extrémité de cette barrette est engagée avec un certain jeu axial dans l'une de deux ouvertures radiales opposées 25 pratiquées dans la partie centrale 20a de la bague. La limitation des débattements axiaux de la tige par rapport à la structure 1 est assurée ici par butée vers le haut ou vers le bas des extrémités de la barrette contre la face interne supérieure ou inférieure de chaque ouverture 25. La barrette 11a joue ainsi le rôle de butée d'attaque et de détente.

La Fig. 4 montre une variante différant de la disposition de la Fig. 2 par les points suivants: le manchon 13b ne comporte pas de collerette inférieure 24; un anneau en élastomère 26 revêt la face inférieure de l'armature inférieure 22b dans une zone située radialement à l'intérieur du palier 10; et une seconde coupelle 27 coaxiale à la tige 7 est serrée entre l'épaulement 17 et l'entretoise 18, de sorte que la portion interne inférieure 28 de la bague d'appui est interposée avec jeu axial entre les deux coupelles 11b et 27. La limitation des débattements axiaux de la tige 7 par rapport à la structure 1 est ici assurée vers le haut ("attaque") par butée de la seconde coupelle 27 contre l'anneau 26 et vers le bas ("détente") par butée de la coupelle 11b contre la face supérieure de la portion interne 28 de la bague d'appui. Ce mode de réalisation est particulièrement compact radialement.

Dans tous les exemples décrits ci-dessus, une capacité 6 d'un dispositif hydraulique est délimitée par une membrane 29 appliquée contre la face supérieure de l'articulation souple 5. A cet effet, la pièce filetée 19 de fixation du manchon 13, 13a, 13b sur la tige 7 comporte une tête plate 30 engagée dans un évidement de forme complémentaire pratiqué dans la face inférieure de la membrane de manière que celle-ci ne se détériore pas à la longue par suite des débattements axiaux de la tige par rapport à la structure. Un tel aménagement procure ainsi une meilleure fiabilité que les dispositifs classiques dans lesquels une coupelle de limitation de détente est située au-dessus de l'articulation souple. Cet avantage est de plus obtenu sans augmentation de l'encombrement dans cette zone ni complication des moyens mis en jeu.

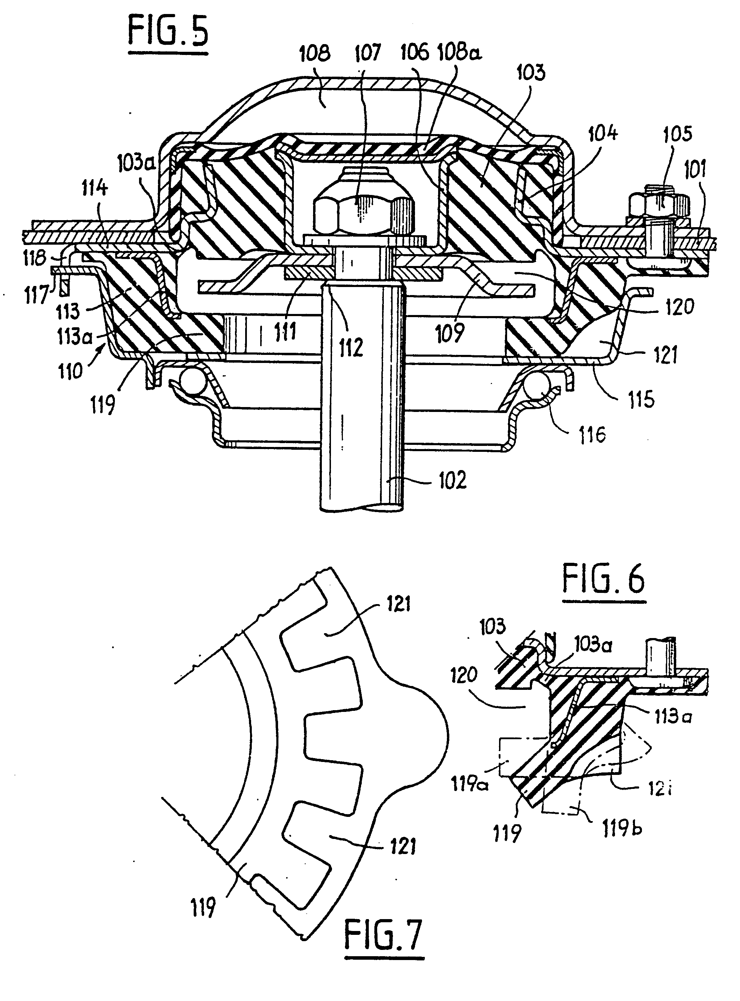

On voit sur la Fig. 5 un dispositif de liaison reliant élastiquement à une partie 101 de la structure d'un véhicule la partie supérieure d'une tige coulissante 102 d'une jambe de suspension associé à une roue du véhicule.

Le dispositif comporte une articulation souple composée d'un manchon 103 en élastomère adhérisé, d'une part, sur une armature extérieure 104 fixée à la structure par des boulons 105 et, d'autre part, sur une armature intérieure 106, fixée à l'extrémité filetée de la tige 102 par un écrou 107. Au-dessus de l'articulation se trouve une capacité 108 maintenue par les boulons 105 et faisant partie d'un dispositif hydraulique comportant une membrane circulaire 108a appliquée directement sur la face supérieure du manchon 103.

Le dispositif comporte en outre, d'une part, une pièce de butée 109 constituée par un disque traversé en son centre par l'extrémité de la tige 102, à laquelle il est fixé par l'écrou 107 et, d'autre part, une pièce d'appui 110 solidaire de la structure et propre à coopérer avec la face inférieure du disque 109. Ce dernier est soudé à l'armature intérieure 106 et mis en appui par l'écrou 107, avec interposition d'une rondelle 111, contre un épaulement 112 de la tige 102.

La pièce d'appui 110 comporte un anneau en élastomère 113 coaxial à la tige 102, adhérisé à sa partie supérieure à un flasque annulaire 114 qui prolonge l'armature 104, et logé à sa partie inférieure dans une coupelle 115 en forme de cuvette évidée en son centre et à concavité tournée vers le haut. Cette coupelle sert d'appui supérieur, par l'intermédiaire d'un roulement 116, à un ressort hélicoïdal (non représenté) entourant la tige 102. Le bord extérieur et supérieur de la coupelle 115 est muni de pattes radiales 117 accrochées avec un léger jeu en direction axiale dans des languettes ajourées et pliées 118 prévues à la périphérie du flasque 114 de manière à maintenir la coupelle vers le haut contre l'anneau 113 et à autoriser, tout en les limitant, des déplacements relatifs axiaux entre la coupelle et le flasque, permettant ainsi à l'anneau 113 de filtrer des vibrations transmises du ressort vers la structure.

L'anneau 113 est relié au manchon 103 par une lèvre commune circulaire 103a de sorte que l'anneau constitue un prolongement du manchon, les deux pièces étant moulées ensemble. Une bague métallique 113a soudée au flasque 114 est insérée dans l'anneau 113 pour le rigidifier en direction transversale.

L'anneau 113 comporte à sa partie inférieure une collerette interne 119 qui est inclinée vers le bas quand l'anneau est à l'état libre, comme montré à la Fig. 6, mais qui est maintenue déformée en position sensiblement radiale quand la coupelle 115 est mise en place, comme visible à la Fig. 5; le diamètre intérieur de la collerette 119 est alors, comme celui de la coupelle 115, inférieur au diamètre extérieur du disque 109, lequel se trouve prisonnier dans l'espace 120 intérieur à l'anneau, axialement compris entre la collerette 119 et le manchon 103.

L'anneau comporte en outre, uniformément répartis sur son pourtour extérieur inférieur, des évidements 121 assouplissant cette partie de l'anneau et facilitant la déformation de la collerette: celle-ci est ainsi montrée à la Fig. 6, en traits mixtes, d'une part, en position radiale d'utilisation 119a, d'autre part en position 119b écartée, avoisinant une forme cylindrique et autorisant non seulement le démoulage d'un noyau emplissant l'espace 120 lors de la fabrication de l'anneau 113 et du manchon 103, mais aussi l'engagement du disque 109 dans l'espace 120 avant son soudage à l'armature 106.

Ce dispositif est relativement peu coûteux car il permet de fabriquer simultanément, l'articulation à manchon 103 et l'anneau 113 de la pièce d'appui 110, en évitant l'adhérisation de la coupelle 115, tandis que grâce à son montage par déformation de la collerette 119, la pièce de butée 109 peur être circulaire et coopérer par tout son pourtour avec la pièce d'appui 110, 119, 115 de façon particulièrement fiable.

## Revendications

1. Dispositif de liaison entre la structure (1; 101) d'un véhicule et la partie supérieure d'une jambe de suspension (3; 102), comprenant une articulation souple (5) du type comportant un manchon élastique (13; 103) disposé entre deux armatures (14, 15; 106, 104), respectivement fixées sur un élément supérieur (7; 102) de la jambe de suspension et sur la structure, une pièce de butée fixée sur ledit élément supérieur et s'étendant au-dessous de l'articulation souple (5) et une pièce d'appui (12; 12a; 12b; 110) fixée à la structure et disposée au-dessous de la pièce de butée (11; 11a; 109) pour coopérer en détente, avec cette dernière, caractérisé en ce qu'il comporte une autre pièce (21; 21a; 103; 27) disposée également au-dessous de l'articulation souple (5) et avec laquelle l'une desdites pièces de butée (11; 11a; 109) ou d'appui (22b) peut coopérer, lors des débattements, en attaque, de la suspension.

2. Dispositif suivant la revendication 1, caractérisé en ce que la pièce d'appui (12) comporte une partie centrale en élastomère (20, 20$_a$, 23, 28) une armature supérieure (21, 21$_a$) fixée à la structure et une armature inférieure (22, 22$_b$).

3. Dispositif suivant la revendication 2, caractérisé en ce que ladite partie centrale en élastomère (20$_a$) et l'armature supérieure (21$_a$) de la pièce d'appui sont formées par des prolongements du manchon élastique (13$_a$) et d'une armature (15$_a$) de l'articulation souple (5), cette masse d'élastomère (20$_a$) délimitant au moins deux ouvertures radiales (25) dans lesquelles s'engagent des parties de la pièce de butée (11$_a$).

4. Dispositif suivant l'une quelconque des revendications 1 à 3, caractérisé en ce que l'élément supérieur (7) de la jambe de suspension porte deux pièces de butée (11$_b$, 27) entre lesquelles est disposée avec un jeu axial, une pièce d'appui (22$_b$, 26, 28) reliée à la structure.

5. Dispositif suivant l'une quelconque des revendications précédentes, caractérisé en ce que la pièce d'appui (12) porte à sa partie inférieure un palier (10) d'appui axial pour un ressort (9) entourant la jambe de suspension.

6. Dispositif suivant l'une quelconque des revendications 1 à 5, caractérisé en ce qu'une capacité (6) d'un dispositif hydraulique étant située au-dessus de l'articulation souple et comportant une membrane (29) en appui sur la face supérieure du manchon (13) la pièce (19) de fixation de ce dernier sur l'élément supérieur de la jambe de suspension comporte une tête plate (30) engagée dans un évidement de forme sensiblement complémentaire pratiqué dans la face inférieure de la membrane.

7. Dispositif suivant la revendication 1, caractérisé en ce que la pièce d'appui (110) comporte un anneau en élastomère (113) coaxial à la jambe de suspension adherisé à sa partie supérieure à un flasque annulaire (114) prolongeant l'armature (104) fixée sur la structure et logé à sa partie inférieure dans une coupelle (115) maintenue axialement avec une faible liberté de deplacement par rapport au flasque (114), l'anneau (113) comportant une collerette interne inférieure (119) inclinée vers le bas à l'état libre et maintenue déformée en position sensiblement radiale par coopération avec la coupelle (115).

8. Dispositif suivant la revendication 7, caractérisé en ce que l'anneau (113) en élastomère constitue un prolongement du manchon élastique (103).

9. Dispositif suivant la revendication 7, caractérisé en ce que la coupelle (115) est maintenue axialement par accrochage avec léger jeu de son bord extérieur supérieur dans des languettes pliées (118) prévues à la périphérie du flasque (114).

10. Dispositif suivant la revendication 7, caractérisé en ce que des évidements (121) sont répartis sur le pourtour inférieur extérieur de l'anneau (113) de manière à assouplir cette partie de l'anneau et à faciliter la déformation de la collerette (119).

11. Dispositif suivant la revendication 7, caractérisé en ce que la pièce de butée (109) est circulaire, disposée dans l'espace intérieur à l'anneau (113) axialement entre la collerette (119) et le manchon (103) et elle est rendue solidaire de l'armature (106) fixée à la jambe de suspension.


**Patentansprüche**

1. Verbindungsvorrichtung zwischen dem Aufbau (1; 101) eines Fahrzeugs und dem oberen Teil eines Aufhängungsbeins (3; 102), mit einem biegeelastischen Gelenk (5) mit elastischer Hülse (13; 103), welche zwischen zwei jeweils auf einem oberen Element (7; 102) des Aufhängungsbeins und an dem Aufbau befestigten Bewehrungen (14, 15; 106, 104) angeordnet ist, einem auf dem oberen Element angeordneten und sich über das biegeelastische Gelenk (5) erstreckenden Anschlagelement und einem an dem Aufbau befestigten und oberhalb des Anschlagelements (11; 11a; 109) angeordneten Halteelement (12; 12a; 12b; 110), welches bei Entspannung mit letzterem zusammenwirkt, dadurch gekennzeichnet, daß die Vorrichtung ein weiteres, ebenfalls oberhalb des biegeelastischen Gelenks (5) angeordnetes Teil (21; 21a; 103; 27) aufweist, mit welchem eines der Anschlag- (11; 11a; 109) oder Halteelemente (22b) während der Durchfederung der Aufhängung zusammenwirkt.

2. Vorrichtung nach Anspruch 1, dadurch gekennzeichnet, daß das Halteelement (12) ein Mittelteil (20, 20a, 23, 28) aus Elastomer, eine an dem Aufbau befestigte obere Bewehrung (21, 21a) und eine untere Bewehrung (22, 22b) aufweist.

3. Vorrichtung nach Anspruch 2, dadurch gekennzeichnet, daß das Mittelteil aus Elastomer (20a) und die obere Bewehrung (21a) des Halteelements durch Verlängerungen der elastischen Hülse (13a) und aus einer Bewehrung (15a) des biegeelastischen Gelenks (5) gebildet werden, wobei der Körper aus Elastomer (20a) mindestens zwei radiale Öffnungen (25) aufweist, in welche Teile des Anschlagelements (11a) eingreifen.

4. Vorrichtung nach einem der Ansprüche 1 bis 3, dadurch gekennzeichnet, daß das obere Element (7) des Aufhängungsbeins zwei Anschlagelemente (11b, 27) mit einem dazwischen mit einem axialen Spiel angeordneten, an dem Aufbau befestigten Halteelement (22b, 26, 28) aufweist.

5. Vorrichtung nach einem der vorstehenden Ansprüche, dadurch gekennzeichnet, daß das Halteelement (12) an seinem unteren Teil mit einem axialen Haltelager (10) für eine das Aufhängungsbein umschließende Feder (9) versehen ist.

6. Vorrichtung nach einem der Ansprüche 1 bis 5, dadurch gekennzeichnet, daß ein Behälter (6) einer Hydraulikvorrichtung oberhalb des biegeelastischen Gelenks (5) angeordnet und eine auf der Oberseite der Hülse (13) aufliegende Membran (29) vorgesehen ist, und daß ein Element (19) zur Befestigung der letzteren auf dem oberen Element des Aufhängungsbeins eine Kopfplatte (30) aufweist, welche in eine an der Innenseite der Membran angeordnete Aussparung von genau komplementärer Form eingesetzt ist.

7. Vorrichtung nach Anspruch 1, dadurch gekennzeichnet, daß das Halteelement (110) einen koaxial zum Aufhängungsbein angeordneten Ring (113) aus Elastomer aufweist, welcher mit seinem oberen Teil an einer ringförmigen Zierblende (114) zur Verlängerung der Bewehrung (104) befestigt ist, welche an dem Aufbau vorgesehen und mit ihrem unteren Teil in einem mit einem kleinen Bewegungsspielraum in bezug auf die Zierblende (114) axial angeordneten schalenförmigen Körper (115) gelagert ist, wobei der Ring (113) einen frei nach unten geneigten und in einer durch das Zusammenwirken mit dem schalenförmigen Körper (115) genau radialen Stellung gehaltenen Innenkragen (119) an der Unterseite aufweist.

8. Vorrichtung nach Anspruch 7, dadurch gekennzeichnet, daß der Ring (113) aus Elastomer eine Verlängerung der elastischen Hülse (103) ist.

9. Vorrichtung nach Anspruch 7, dadurch gekennzeichnet, daß der schalenförmige Körper (115) durch Eingriff seines oberen Randes in dem am Umfang der Zierblende (114) vorgesehenen gekrümmten Bord (118) bei geringem Spiel axial gehalten wird.

10. Vorrichtung nach Anspruch 7, dadurch gekennzeichnet, daß die Aussparungen (121) über den unteren Außenumfang des Ringes (113) so verteilt sind, daß dieser Teil des Ringes elastisch ist und der Kragen (119) leichter verformbar wird.

11. Vorrichtung nach Anspruch 7, dadurch gekennzeichnet, daß das Anschlagelement (109) kreisförmig ist, axial zwischen dem Kragen (119) und der Hülse (103) im Innenraum des Ringes (113) angeordnet ist und mit der an dem Aufhängungsbein befestigten Bewehrung (106) fest verbunden wird.

## Claims

1. A connecting device between the structure (1; 101) of a vehicle and the upper part of a suspension strut (3; 102), comprising a flexible joint (5) of the type including a resiliently yieldable sleeve (13; 103) disposed between two frames (14, 15; 106, 104) respectively fixed to an upper element (7; 102) of the suspension strut and to the structure, an abutment element fixed to said upper element and extending below the flexible joint (5) and a support element (12; 12a; 12b; 110) fixed to the structure and disposed below the abutment element (11; 11a; 109) for cooperation therewith in extension, characterized in that it comprises another element (21; 21a; 103; 27) likewise disposed below the flexible joint (5) with which one of the abutment (11; 11a; 109) or support (22b) elements can cooperate during the upward compression movement of the suspension.

2. A device according to claim 1, characterized in that the support element (12) includes a central part of elastomer (20, 20a, 23, 28), an upper frame (21, 21a) fixed to the structure and a lower frame (22, 22b).

3. A device according to claim 2, characterized in that said central part of elastomer (20a) and the upper frame (21a) of the support element are formed by extensions of the resiliently yieldable sleeve (13a) and of a frame (15a) of the flexible joint (5), this mass of elastomer (20a) defining at least two radial openings (25) in which portions of the abutment element (11a) are engaged.

4. A device according to any one of the claims 1 to 3 characterized in that the upper element (7) of the suspension strut carries two abutment members (11b, 27) between which is disposed, with an axial clearance, a support element (22b, 26, 28) connected to the structure.

5. A device according to any one of the preceding claims, characterized in that the support element (12) carries in its lower part a bearing (10) providing an axial support for a spring (9) surrounding the suspension strut.

6. A device according to any one of the claims 1 to 5, characterized in that as a chamber (6) of a hydraulic device is disposed above the flexible joint and includes a diaphragm (29) bearing against the upper surface of the sleeve (13), the member (19) for fixing the latter to the upper element of the suspension strut comprises a flat head (30) engaged in a cavity of substantially complementary shape formed in the lower surface of the diaphragm.

7. A device acocrding to claim 1, characterized in that the support element (110) includes a ring of elastomer (113) coaxial with the suspension strut, bonded in its upper part to an annular flange (114) extending the frame (104) fixed to the structure, and disposed in its lower part in a cup (115) which is maintained axially with a small freedom of movement relative to the flange (114), the ring (113) including a lower inner flange (119) which is downwardly inclined in the free state and is maintained deformed in a substantially radial position by cooperation with the cup (115).

8. A device according to claim 7, characterized in that the ring (113) of elastomer constitutes an extension of the resiliently yieldable sleeve (103).

9. A device according to claim 7, characterized in that the cup (115) is maintained axially by hooking with a slight clearance of its upper outer edge in bent strips (118) provided on the periphery of the flange (114).

10. A device according to claim 7, characterized in that cavities (121) are arranged along the outer lower periphery of the ring (113) so as to render this part of the ring more flexible and facilitate the deformation of the flange (119).

11. A device according to claim 7, characterized in that the abutment element (109) is circular, disposed in the space inside the ring (113) axially between the flange (119) and the sleeve (103) and is connected to the frame (106) fixed to the suspension strut.

FIG.1

FIG. 2

FIG. 3

FIG.4

# FIG.5

# FIG.6

# FIG.7